(19) Europäisches Patentamt
European Patent Office
Office européen des brevets

(11) EP 0 464 534 B1

(12) **EUROPÄISCHE PATENTSCHRIFT**

(45) Veröffentlichungstag und Bekanntmachung des Hinweises auf die Patenterteilung:
**21.05.1997 Patentblatt 1997/21**

(51) Int Cl.⁶: **H04B 1/66**

(21) Anmeldenummer: **91110309.1**

(22) Anmeldetag: **22.06.1991**

(54) **Transformationskodierer mit adaptiver Fensterfunktion**

Transform coder with adaptive window function

Codeur de transformation avec fonction de fenêtre adaptative

(84) Benannte Vertragsstaaten:
**AT BE CH DE DK ES FR GB GR IT LI LU NL SE**

(30) Priorität: **29.06.1990 DE 4020656**

(43) Veröffentlichungstag der Anmeldung:
**08.01.1992 Patentblatt 1992/02**

(73) Patentinhaber: **DEUTSCHE THOMSON-BRANDT GMBH**
**78048 Villingen-Schwenningen (DE)**

(72) Erfinder:
- **Schröder, Ernst, Dr.-Ing.**
  **W-3000 Hannover 51 (DE)**
- **Spille, Jens, Dipl.-Ing.**
  **W-3005 Hemmingen (DE)**

(74) Vertreter: **Hartnack, Wolfgang, Dipl.-Ing.**
**Deutsche Thomson-Brandt GmbH**
**Patentabteilung**
**Göttinger Chaussee 76**
**30453 Hannover (DE)**

(56) Entgegenhaltungen:
**WO-A-90/14719** **DE-A- 3 506 912**
**DE-A- 3 902 948** **DE-C- 3 015 234**

- **Frequenz, Bd. 43, Nr. 9, Sept. 1989, Seiten 252-256**
- **IEEE Transactions on Acoustics, Speech, and Signal Processing, Vol. ASSP-27, Nr.4, August 1979, Seiten 328-335**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 464 534 B1

Printed by Jouve, 75001 PARIS (FR)

## Beschreibung

Die Erfindung betrifft ein Verfahren zur Übertragung eines Signals nach dem Oberbegriff des Anspruchs 1.

Bei der Übertragung eines Audiosignals, z.B. bei der Rundfunkübertragung, Kabelübertragung, Satellitenübertragung und bei Aufzeichnungsgeräten ist es bekannt, das analoge Audiosignal in ein digitales Audiosignal mit einer bestimmten Auflösung umzuwandeln, in dieser Form zu übertragen und bei der Wiedergabe wieder in ein analoges Signal umzusetzen. Durch die digitale Übertragung wird insbesondere bei der Wiedergabe ein größerer Störabstand erreicht.

Die für die Übertragung eines solchen Signals erforderliche Bandbreite ist im wesentlichen bestimmt durch die Zahl der zu übertragenden Abtastwerte pro Zeiteinheit sowie durch die Auflösung.

In der Praxis besteht die Forderung, die für die Übertragung notwendige Bandbreite möglichst klein zu halten, um mit einem schmalbandigen Kanal auszukommen oder über einen vorhandenen Kanal möglichst viele Audiosignale gleichzeitig übertragen zu können. Die erforderliche Bandbreite läßt sich an sich verringern durch eine Reduzierung der Abtastwerte oder der Anzahl der Bits pro Abtastwert.

Diese Maßnahme hat aber in der Regel eine Verschlechterung bei der Wiedergabe zur Folge. Bei einem bekannten Verfahren (DE OS 35 06 912.0) wird zur Verbesserung der Wiedergabequalität das digitale Audiosignal in zeitlich aufeinanderfolgenden Abschnitten in ein Kurzzeitspektrum transformiert, welches jeweils für die Zeitabschnitte, z.B. 20 ms, die tralkomponenten des Signals darstellt. In dem Kurzzeitspektrum lassen sich auf Grund psyocho-akustischer Gesetzmäßigkeiten im allgemeinen Komponenten, die vom Hörer nicht wahrgenommen werden, also im nachrichtentechnischen Sinn irrelevant sind, besser auffinden, als im Zeitbereich. Diese Komponenten werden bei der Übertragung weniger gewichtet oder ganz weggelassen. Durch diese Maßnahme kann bei der Übertragung ein beträchtlicher Teil der sonst notwendigen Daten entfallen, so daß die mittlere Bitrate wesentlich verringert werden kann.

Zur Aufteilung des Signals in Abschnitte eignet sich das aus J. P. Princen and A. B. Bradley, "Analysis/Synthesis Filterbank Design based on Time Domain Aliasing Cancellation," IEEE-Transactions Acoustics, Speach, Signal-Processing, Volume ASSP-34, pages 1153 - 1161, Oktober 1986, beschriebene Verfahren. Es wird hierin eine Transformation beschrieben, bei der überlappende Blöcke mit abgerundeten Fensterfunktionen in den Fenstern ohne zusätzliche Koeffizienten im Frequenzbereich erzeugt werden. Bei diesem Verfahren werden zunächst N Werte mit Hilfe einer Fensterfunktion f(n) der Länge N aus dem Eingangssignal herausgeschnitten und anschließend zu N/2 signifikanten Koeffizienten im Frequenzbereich transformiert. Die Rücktransformation berechnet aus dem N/2 Koeffizienten N Abtastwerte, die wiederum mit der Fensterfunktion f(n) gewichtet werden.

Das Ausgangssignal der Rücktransformation unterscheidet sich jedoch vom Eingangssignal der Hintransformation. Die exakte Rekonstruktion des Eingansssignals wird erst dadurch möglich, daß die Ausgangswerte aufeinanderfolgender Rücktransformationen im Überlappungsbereich von jeweils N/2 Abtastwerten addiert werden. Damit durch dieses sogenannte "Overlap-Add" das Eingangssignal wiedergewonnen werden kann, muß die Fensterfunktion f(n) folgende Bedingungen erfüllen:

$$f(N-1-n) = f(n) \qquad 0 \le n \le N-1 \qquad (1)$$

$$f^2(N/2-1-n)+f^2(n) = 2 \qquad 0 \le n \le N/2-1 \qquad (2)$$

Die erste Bedingung entspricht einer Symmetrie von f(n). Die zweite Bedingung entspricht der Punktsymmetrie des Quadrats von f(n) jeweils in einer Fensterhälfte. Unter Berücksichtigung dieser Bedingungen kann die effektive Fensterlänge der Transformation zwischen N/2 und N Abtastwerten variiert werden.

Die Wahl der Fensterlänge bei Anwendung dieser Verfahren in Transformationskodern führt zu folgenden Auswirkungen. Eine große Fensterlänge mit möglichst abgerundeter Form ermöglicht eine gute Frequenzselektivität. Dabei dehnt sich der Fehler durch Quantisierung der Koeffizienten nach der Rücktransformation über die gesamte effektive Fensterlänge aus. Dies kann sich besonders bei starken Sprüngen der Amplitude des zu codierenden Signals negativ auf die subjektive Qualität des codierten Signals auswirken.

Die Wahl kürzerer Fenster bewirkt eine Verschlechterung der Frequenzselektivität, was sich besonders bei stark korrelierten Eingangssignalen negativ auf den zu erzielenden Transformationsgewinn auswirkt. Dagegen lassen sich Fehler durch Quantisierung der Koeffizienten bei starken Signalsprüngen auf das betreffende Fenster beschränken, so daß ihre Auswirkungen auf benachbarte Fenster verhindert werden.

In Frequenz, Bd. 43, Nr. 9, September 1989, Seiten 252-256, wurde eine durch die Signalenergie gesteuerte adaptive Fensterumschaltung für das zu codierende Signal vorgeschlagen, wobei insbesondere ein Hochpaß zur Erkennung von Amplitudensprüngen innerhalb von Signal-Blöcken verwendet wird. In IEEE Transactions on Acoustics, Speech, and Signal Processing, Vol. ASSP-27, Nr. 4, August 1979, Seiten 328-335, ist eine adaptive, von einer 'Pitch Detection' gesteuerte Fensterung zur Anwendung in einem Cepstrum beschrieben.

Der Erfindung liegt die Aufgabe zugrunde, ein Verfahren zur Übertragung eines Signals dahingehend zu verbessern, daß eine optimale Frequenzselektivität und hohe subjektive Qualität des codierten und decodierten Signals erzielt wird. Diese Aufgabe wird durch die Merkmale des Anspruchs 1 gelöst.
Der Erfindung liegt die weitere Aufgabe zugrunde, eine Codier- Vorrichtung zur Anwendung des erfindungsgemäßen Verfahrens anzugeben. Diese Aufgabe wird durch die im Anspruch 10 angegebene Vorrichtung gelöst.

Der Erfindung liegt die Idee zugrunde, daß eine Fensterumschaltung auch dann sinnvoll ist, wenn das Nutzsignal bei konstanter Energie einen Frequenzsprung aufweist. Durch die psycho-akustischen Verhältnisse kann dies sogar unter Umständen notwendig sein. Dazu wird der Nutzsignalfrequenzbereich (z.B. 0... 20kHz) in mindestens 2 nach psycho-akustischen Gesichtspunkten sinnvolle, getrennte Frequenzbereiche aufgeteilt. In den jeweiligen Frequenzbereichen wird das Eingangssignal getrennt ausgewertet und es wird anschließend eine logische Verknüpfung der getrennten Ergebnisse durchgeführt.

Bei einer Weiterbildung der Erfindung wird die Frequenzänderung außerdem zur Filterbandumschaltung für einen Subbandcoder benutzt (adaptive Fensterung), wodurch letztlich der Transformationsgewinn erhöht wird.

Außerdem ist mittels der Frequenzsprungerkennung eine adaptive Quantisierung und Codierung ebenso steuerbar wie Audio-Codierverfahren, wie z.B. NICAM, MUSICAM, MSC, u.s.w., die eine variable Blocklänge zulassen. Durch die Frequenzsprungerkennung lassen sich zudem der Zeitpunkt und die Häufigkeit von Skalenfaktoren, Bitzuteilungsfaktoren u.s.w. berechnen, so daß eine verbesserte Steuerbarkeit und Beobachtbarkeit der Transformation und der vorgenannten Audio-Codierverfahren möglich ist.

Es ist vorteilhaft, wenn zusätzlich zu der Frequenzänderungs-erkennung eine Amplitudenänderungserkennung durchgeführt wird, und durch logische Verknüpfung beider Ergebnisse die adaptive Fensterung, Quantisierung und Codierung durchgeführt wird.

Im folgenden wird die Erfindung anhand eines von vielen möglichen Ausführungsbeispielen in einer Zeichnung näher erläutert. In der Zeichnung stellen dar:

| | |
|---|---|
| In Fig. 1a - c | Fensterfunktionen mit unterschiedlicher Breite, |
| in Fig. 2 | unsymmetrische Fensterfunktionen und |
| in Fig. 3a | den Verlauf eines Eingangssignals mit Amplitudensprung, |
| in Fig. 3b | eine Fensterfunktion, die auf das Eingangssignal in Fig. 3a angepaßt ist, |
| in Fig. 3c | den Verlauf eines Eingangssignals mit Frequenzsprung, |
| in Fig. 3d | eine Fensterfunktion, die auf das Eingangssignal gemäß Fig. 3c angepaßt ist, |
| in Fig. 4a | das Blockschaltbild eines Coderteils eines Senders, |
| in Fig. 4b | das Blockschaltbild eines Decoderteils eines Empfängers. |

In Fig. 1 sind mehrere Fenster konstanter Breite (b) mit unterschiedlichen Fensterfunktionen f(n) dargestellt. Die Fenster werden jeweils so zusammengesetzt, daß sich die benachbarten Fenster zur Hälfte überlappen. Dadurch entsteht bei der sinusförmigen Fensterfunktion f(n) in Fig. 1a ebenfalls eine Überlappung zur Hälfte, bei der Darstellung gemäß Fig. 1b eine Teilüberlappung, die weniger als die Hälfte beträgt und in Fig. 1c nur eine Berührung der beiden Schenkel der Fensterfunktion f(n).

Fig. 2 zeigt die Überlagerung zweier Fenster mit unsymmetrischen Fensterfunktionen f(n) und g(n). Die Fensterfunktionen sind jedoch in ihrem gemeinsamen überlappenden Bereich so ausgestaltet, daß sich ihre Resultierenden zu 1 ergänzen.

In Fig. 3a ist ein Amplitudenverlauf A(t) eines Eingangssignals dargestellt. Wie zu erkennen ist, besitzt das Signal zunächst eine gleichmäßige geringe Amplitude, der ein Signalsprung folgt, worauf sich die ursprüngliche Amplitude fortsetzt. Darunter sind in Fig. 3b Fensterfunktionen der Fenster dargestellt, mit denen dieses Signal optimal bearbeitet werden kann. Im ersten Bereich 1 handelt es sich um sinusförmige Fensterfunktionen, die eine hohe Frequenzselektivität ermöglichen. Das Fenster 3, in dem das Signal mit der hohen Amplitude hineinfällt, besitzt dagegen eine Fensterfunktion die sehr schmal ist. Die Fensterfunktionen der benachbarten Fenster 2 und 4, also des vorhergehenden und des nachfolgenden Fensters besitzen im überlappenden Bereich eine entsprechend angepaßte Fensterfunktion, so daß sich in diesen Bereichen die Fensterfunktionen zu eins ergänzen. Damit haben die Fensterfunktionen in diesen beiden angrenzenden Fenstern 2 und 4 eine unsymmetrische Gestalt. Quantisierungsstörungen, die innerhalb des Fensters 3 auftreten würden, in die der Signalsprung hineinfällt, werden so auf den Bereich der Fensterfunktionen des Fensters 3 beschränkt und damit etwa gegenüber einer Fensterfunktion mit sinusförmigem Verlauf auf die Hälfte der zeitlichen Ausdehnung reduziert. Durch den Verdeckungseffekt des Signalsprunges ergibt sich so trotz der verringerten Frequenzselektivität eine subjektive Verbesserung der Audio-Qualität.

In Fig. 3c ist der Frequenzverlauf F(t) eines Eingangssignals dargestellt. Wie zu erkennen ist, besitzt das Signal zunächst eine konstante Frequenz (z.B. 10 kHz), worauf ein Frequenzsprung auf eine wesentlich niedrigere Frequenz folgt (z.B. 200 Hz) erfolgt. Die Amplitude des Signals bleibt dabei konstant. In Fig. 3d sind Fensterfunktionen der Fenster dargestellt, mit denen dieses Signal optimal bearbeitet werden kann.

Im ersten Bereich 1 handelt es sich um sinusförmige Fensterfunktionen, die eine hohe Frequenzselektivität ermöglichen. Die Fensterfunktionen der Fenster 2 und 3, in die der Frequenzsprung hineinfällt, besitzen im überlappenden Bereich eine entsprechend so angepaßte Fensterfunktion, daß sich in diesem Bereich die Fensterfunktionen zu 1 ergänzen. Dabei ist der überlappende Bereich sehr schmal ausgebildet. Damit haben die Fensterfunktionen in den beiden angrenzenden Fenstern 2 und 3 eine unsymmetrische Gestalt. Quantisierungsstörungen, die innerhalb des Fensters 3 auftreten würden, in die der Signalsprung hineinfällt, werden so auf den Bereich der Fensterfunktionen des Fensters 3 beschränkt und damit etwa gegenüber einer Fensterfunktion mit sinusförmigem Verlauf auf die Hälfte der zeitlichen Ausdehnung reduziert. Durch den Verdeckungseffekt des Signalsprungs ergibt sich so trotz der verringerten Frequenzselektivität eine subjektive Verbesserung der Audio-Qualität.

Zur einfachsten Frequenzsprungerkennung wird das Nutzsignal mit dem Nutzsignalfrequenzbereich (0 ... 20 kHz) hier in zwei getrennte Frequenzbereiche (0 ... 1 kHz und 1 kHz ... 20 kHz) aufgeteilt. Jeder Frequenzbereich wird nun getrennt ausgewertet und anschließend werden die getrennten Ergebnisse logisch miteinander verknüpft.

Dies führt unter psycho-akustischen Gesichtspunkten zu folgender Fensterumschaltung: Bei Abnahme der Signalenergie im oberen Frequenzbereich und gleichzeitiger Zunahme im unteren Frequenzbereich muß eine Fensterumschaltung vorgenommen werden, da dies aus psycho-akustischen Gesichtspunkten notwendig ist. Es liegt dann der Fall im Bereich des Frequenzsprunges gemäß Fig. 3c vor. Bei Energieabnahme im oberen Bereich und keiner Zunahme im unteren Bereich ist keine Fensterumschaltung notwendig, da dieser Fall unkritisch ist. Ebenso kann eine Fensterumschaltung unterbleiben, wenn eine Energiezunahme nur im unteren Bereich erfolgt. Erfolgt eine Energiezunahme nur im oberen Bereich, muß eine Umschaltung in gewohnter Weise erfolgen. Erfolgt eine Energiezunahme in beiden Bereichen, muß eine Umschaltung auf kleine Fensterlängen erfolgen, weil das Signal impulshaltig sein muß.

Zur Frequenzänderungs-Erkennung sind Analyse-Filter geeignet, wie sie auch schon in Sub-Bandcodern Verwendung finden. Es sind aber auch einfachere Filter (z.B. minimalphasige Filter oder Filterbänke ohne Rekonstruktionsmöglichkeit) denk denkbar.

In Fig. 4a ist das Blockschaltbild eines Coderteils in einem Sender gezeigt. Als Transformation ist in dem hier realisierten Coder die OBT (Overlapping-Block-Transform) realisiert, die zur Klasse der halb-überlappenden Transformationen gehört. Bei einem Vorschub von einem Block von N-Abtastwerten im Zeitbereich und einer Transformation von zwei N-Abtastwerten erhält man im Bildbereich auch wiederum nur N-Abtastwerte, so daß keine zusätzlichen Koeffizienten übertragen werden müssen. Die OBT erfüllt zudem die Forderung, daß die Transformations-Koeffizienten dem Spektrum des Eingangssignals entsprechen sollen. Durch die bei der OBT mögliche Verwendung von nicht-rechteckigen Fenstern werden auch die Blockeffekte vermindert und die Frequenzselektivität verbessert. Durch die bei der OBT mögliche adaptive Fensterung, d.h. Umschaltung der Transformationslänge und der Fensterform sowie Fensterlänge, wird die obere Grenze für N hier nicht durch die Verdeckungszeit bestimmt. Damit bewirkt die adaptive Fensterung eine zusätzliche Verbesserung dadurch, daß durch die Länge der Transformationslänge eine gute Frequenzauflösung und ein höherer Transformationsgewinn erzielt wird und bei entsprechender Fensteradaption die Vorechos durch Umschaltung auf kürzere Transformationslängen unterdrückt werden können. Für die Fensteradaption ist eine Signalsprung-Erkennung(Kombination aus Amplitudensprung- und Frequenzsprungerkennung) vorgesehen, um Impuls-, Amplituden-, Phasen- und Frequenzänderungen in einem Block vorab zu erkennen. Die Signalsprung-Erkennung erzeugt ein Fenster-Signal - nachfolgend Fensterkennung genannt - mit der die Fensterung, Transformation und adaptive Quantisierung und Codierung im Coderteil des Senders gesteuert wird. Durch die Vorabanalyse des Eingangssignals wird vermieden, daß ein Datenblock mehrmals mit verschiedenen Transformationslängen transformiert und codiert wird und danach erst durch Vergleich entschieden wird, welche der codierten Werte zur Übertragung gelangen.

Zusammen mit der adaptiven Bitzuweisung und adaptiven Quantisierung, die die Verdeckungseigenschaften des menschlichen Gehörs im Frequenzbereich ausnutzen, ergibt sich mit dem realisierten Coder eine Möglichkeit, die psycho-akustischen Verhältnisse weitestgehend zu berücksichtigen.

Mittels der Fensterkennung kann im Decoder, siehe Fig. 4b, eine entsprechende adaptive Decodierung und inverse OBT durchgeführt werden, so daß als Ausgangssignal die psychoakustisch allein relevanten Signale ausgegeben werden. Das Signal X(n)' hat zwar objektiv einen geringeren Informationsgehalt als das Signal X(n), jedoch ist der Unterschied für das menschliche Gehör nicht wahrnehmbar, so daß eine völlig korrektes dem psycho-akustischen Verhältnissen angepaßtes Signal wahrnehmbar ist.

Die vorbeschriebene Erfindung ist keineswegs nur auf die OBT beschränkt, sondern sie ermöglicht zudem eine Steuerung aller bekannten Audio-Codierverfahren, die eine variable Blocklänge zulassen, wie z.B. NICAM, MUSICAM, MSC. Mittels der Frequenzsprungerkennung läßt sich der Zeitpunkt und die Häufigkeit von Skalenfaktoren, Zuteilungsfaktoren u.s.w. berechnen.

## Patentansprüche

1. Verfahren zur Codierung, Übertragung oder Decodierung eines Audio-Signals (x), das im Zeitbereich durch Fensterfunktionen in aufeinanderfolgende, überlappende Fenster aufgeteilt wird, wobei die in den Fenstern enthaltenen Teilsignale jeweils durch Transformation in ein Spektrum ($\underline{X}$) umgewandelt

und die Spektren codiert werden und nach einer Übertragung decodiert und durch Rück-Transformation wieder in Teilsignale überführt werden und die die Teilsignale enthaltenden Blöcke überlappend aneinandergefügt werden, wobei die überlappenden Bereiche der Blöcke durch die Fensterfunktionen so gewichtet werden, daß sich die Resultierende der Fensterfunktionen (f(n), g(n)) zu eins ergibt, **dadurch gekennzeichnet**, daß die Fensterfunktionen in Abhängigkeit von Frequenzänderungen des - in mindestens zwei verschiedenen Frequenzbereichen ausgewerteten - Signals gewählt werden, wobei eine Fensterumschaltung vorgenommen wird:

- im Fall der Abnahme der Signalenergie in einem oberen Frequenzbereich und gleichzeitiger Zunahme der Signalenergie in einem unteren Frequenzbereich;
- im Fall der Zunahme der Signalenergie nur in dem oberen Frequenzbereich;
- im Fall der Zunahme der Signalenergie in dem oberen und in dem unteren Frequenzbereich.

**2.** Verfahren nach Anspruch 1, wobei die Fensterumschaltung auch bei konstanter Amplitude des Signals in dem oberen und unteren Frequenzbereich des Signals erfolgt.

**3.** Verfahren nach Anspruch 1 oder 2, wobei die Transformations-Länge und die Fenster-Länge adaptiv umgeschaltet werden.

**4.** Verfahren nach einem oder mehreren der Ansprüche 1 bis 3, wobei die Blöcke konstante Abstände haben und die Länge der Fensterfunktionen im Vergleich zur Länge (N) der Blöcke in Abhängigkeit von den Frequenzänderungen gewählt wird.

**5.** Verfahren nach Anspruch 1, wobei die Abstände der Fenster in Abhängigkeit von den Frequenzänderungen gewählt werden.

**6.** Verfahren nach einem oder mehreren der Ansprüche 1 bis 5, wobei die Länge der Fensterfunktionen bei großen Frequenzänderungen klein und bei kleinen Frequenzänderungen groß gewählt wird.

**7.** Verfahren nach einem der Ansprüche 1 bis 6, wobei die Fensterfunktionen oder ihre Länge oder die Transformations-Länge zusätzlich in Abhängigkeit von Amplitudenänderungen des Signals gewählt werden.

**8.** Verfahren nach Anspruch 7, wobei die Länge der Fensterfunktionen bei großen Amplitudenänderungen klein und bei kleinen Amplitudenänderungen groß gewählt wird.

**9.** Verfahren nach einem oder mehreren der Ansprüche 1 bis 8, wobei die Fensterfunktion eines nachfolgenden Fensters im überlappenden Bereich mit der des vorangestellten Fensters durch Spiegelung der in diesem Bereich vorliegenden Fensterfunktion des vorangestellten Fensters gebildet wird.

**10.** Codier-Vorrichtung für ein Audio-Signal (x), das im Zeitbereich durch eine Fensterungs-Einheit in aufeinanderfolgende, überlappende Fenster aufgeteilt wird, wobei die in den Fenstern enthaltenen Teilsignale durch eine Transformations-Einheit jeweils in ein Spektrum ($\underline{X}$) umgewandelt und diese Spektren in einer Einheit zur adaptiven Quantisierung und Codierung codiert werden, wobei die überlappenden Bereiche der Fenster durch die Fensterfunktionen so gewichtet sind, daß sich die Resultierende der Fensterfunktionen (f(n), g(n)) zu eins ergibt, **dadurch gekennzeichnet,** daß die Fensterfunktionen mittels eines in einer Signalsprung-Erkennungseinheit generierten Fensterkennungs-Signals in Abhängigkeit von Frequenzänderungen des - in mindestens zwei verschiedenen Frequenzbereichen ausgewerteten - Signals Wählbar sind, wobei eine Fensterumschaltung vorgenommen wird:

- im Fall der Abnahme der Signalenergie in einem oberen Frequenzbereich und gleichzeitiger Zunahme der Signalenergie in einem unteren Frequenzbereich;
- im Fall der Zunahme der Signalenergie nur in dem oberen Frequenzbereich;
- im Fall der Zunahme der Signalenergie in dem oberen und in dem unteren Frequenzbereich.

**Claims**

**1.** A method for the coding, transmission, or decoding of an audio signal (x), which is partitioned in the time domain by window functions into successive, overlapping windows, the part signals contained in the windows being respectively converted by transformation into a spectrum ($\underline{X}$) and the spectra are coded and after a transfer are decoded and are changed back into part signals by inverse transformation and the blocks containing the part signals are placed overlapping each other, the overlapping regions of the blocks being weighted by the window functions so that the resultant of the window functions (f(n), g(n)) amounts to one, <u>characterised in that</u> the window functions are selected in dependence upon frequency changes of the signal evaluated in at least two different frequency ranges, wherein a window change-over is undertaken:

- in the case of the reduction in the signal energy in an upper frequency range and a simultaneous increase of the signal energy in a lower frequency range;
- in the case of the increase of the signal energy only in the upper frequency range;
- in the case of the increase of the signal energy in the upper and in the lower frequency range.

**2.** A method according to claim 1, wherein the window change-over occurs even with constant amplitude of the signals in the upper and lower frequency range.

**3.** A method according to claim 1 or 2, wherein the transformation length and the window length are changed adaptively.

**4.** A method according to one or more of claims 1 to 3, wherein the blocks have constant spacing and the lengths of the window functions in comparison to the length (N) of the blocks is selected in dependence on the frequency changes.

**5.** A method according to claim 1, wherein the spacings of the windows are selected in dependence on the frequency changes.

**6.** A method according to one or more of claims 1 to 5, wherein the length of the window functions is selected to be small with large frequency changes and to be large with small frequency changes.

**7.** A method according to any one of claims 1 to 6, wherein the window functions or their length or the transformation length are additionally selected in dependence on amplitude changes.

**8.** A method according to claim 7, wherein the length of the window functions is selected to be small with large amplitude changes and to be large with small amplitude changes.

**9.** A method according to one or more of claims 1 to 8, wherein the window function of a succeeding window in the overlapping region with that of the preceding windows is formed by reflection of the window function in this region.

**10.** A coder device for an audio signal (x), which is partitioned in the time domain by a windowing unit into successive overlapping windows, the part signals contained in the windows being respectively converted by a transformation unit into a spectrum (X̲) and these spectra are coded in a unit for adaptive quantisation and coding, the overlapping regions of the windows being so weighted by the window functions that the resultant of the window functions (f(n), g(n)) amounts to one, characterised in that the window functions can be selected by means of a window-recognition signal generated in a signal jump recognition unit in dependence upon frequency changes of the signal evaluation in at least two different frequency ranges, wherein a window change-over is undertaken:

- in the case of the reduction in the signal energy in an upper frequency range and a simultaneous increase of the signal energy in a lower frequency range;
- in the case of the increase of the signal energy only in the upper frequency range;
- in the case of the increase of the signal energy in the upper and in the lower frequency range.

## Revendications

**1.** Procédé destiné à coder, a transmettre, où à décoder un signal audio (x) qui est divisé dans le temps par des fonctions de fenêtre en fenêtres successives se chevauchant, dans lequel les signaux partiels contenus dans les fenêtres étant à chaque fois convertis par transformation en un spectre (X̲) et les spectres étant codés puis décodés après une transmission pour ensuite être transformés à nouveau en signaux partiels par transformation inverse et les blocs contenant les signaux partiels étant joints les uns au autres en se chevauchant, les zones de chevauchement des blocs étant pondérées par les fonctions de fenêtre de telle façon que les résultats des fonctions de fenêtre (f(n), g(n)) se complètent à un, caractérisé par le fait que les fonctions de fenêtre sont choisies en fonction des variations de la fréquence du signal évalué dans au moins deux plages de fréquences différentes, une commutation de fenêtre étant alors effectuée :

- dans le cas de la diminution de l'énergie du signal dans une plage de fréquences supérieure et de l'augmentation simultanée de l'énergie du signal dans une plage de fréquences inférieure ;
- dans le cas de l'augmentation de l'énergie du signal seulement dans la plage de fréquences supérieure;
- dans le cas de l'augmentation de l'énergie du signal dans la plage de fréquences supérieure et inférieure.

**2.** Procédé selon la revendication 1, dans lequel la commutation de fenêtre est également effectuée en cas d'amplitude constante du signal dans la plage de fréquences supérieure et inférieure du signal.

**3.** Procédé selon la revendication 1 ou 2, dans lequel la longueur de transformation et la longueur de la fenêtre sont commutées de façon adaptative.

**4.** Procédé selon une ou plusieurs des revendications 1 à 3, dans lequel les blocs ont des écarts constants et la longueur des fonctions de fenêtre par comparaison avec la longueur (N) des blocs est choisie en fonction des variations de la fréquence.

**5.** Procédé selon la revendication 1, dans lequel les écarts des fenêtres sont choisis en fonction des variations de la fréquence.

**6.** Procédé selon une ou plusieurs des revendications 1 à 5, dans lequel la longueur des fonctions de fenêtre est choisie courte dans le cas de variations importantes de la fréquence et grande dans le cas de faibles variations de la fréquence.

**7.** Procédé selon l'une des revendications 1 à 6, dans lequel les fonctions de fenêtre ou leur longueur ou la longueur de transformation sont également choisies en fonction des variations de l'amplitude du signal.

**8.** Procédé selon la revendication 7, dans lequel la longueur des fonctions de fenêtre est choisie courte dans le cas de variations importantes de l'amplitude et grande dans le cas de faibles variations de l'amplitude.

**9.** Procédé selon une ou plusieurs des revendications 1 à 8, dans lequel la fonction de fenêtre d'une fenêtre suivante dans la zone de chevauchement avec la fenêtre présentée est formée en réfléchissant la fonction de fenêtre de la fenêtre présentée présente dans cette zone.

**10.** Dispositif de codage pour un signal audio (x) qui est divisé dans le temps par une unité de mise en fenêtre en fenêtres successives se chevauchant, dans lequel les signaux partiels contenus dans les fenêtres sont à chaque fois convertis par une unité de transformation en un spectre ($\underline{X}$) et ces spectres sont codés dans une unité en vue d'une quantification et d'un codage adaptatifs, les zones de chevauchement des fenêtres étant pondérées par les fonctions de fenêtre de telle façon que les résultats des fonctions de fenêtre (f(n), g(n)) se complètent à un, caractérisé par le fait que les fonctions de fenêtre peuvent être choisies au moyen d'un signal de détection de fenêtre généré dans une unité de détection des sauts du signal en fonction des variations de la fréquence du signal évalué dans au moins deux plages de fréquences différentes, une commutation de fenêtre étant alors effectuée :

- dans le cas de la diminution de l'énergie du signal dans une plage de fréquences supérieure et de l'augmentation simultanée de l'énergie du signal dans une plage de fréquences inférieure ;
- dans le cas de l'augmentation de l'énergie du signal seulement dans la plage de fréquences supérieure;
- dans le cas de l'augmentation de l'énergie du signal dans la plage de fréquences supérieure et inférieure.

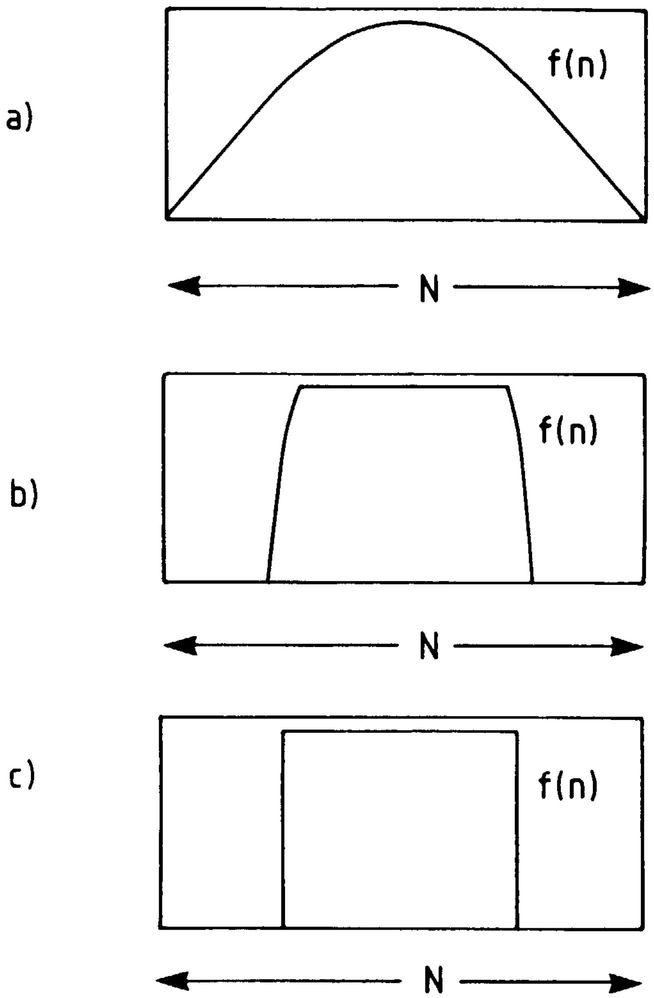


FIG.1

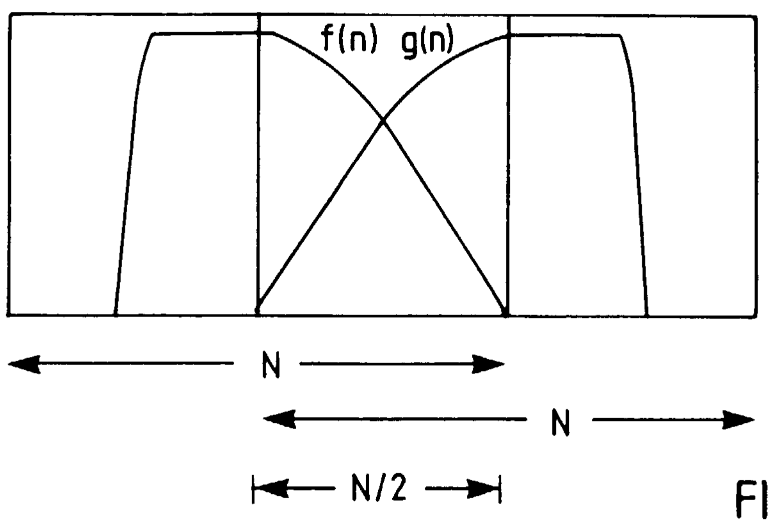


FIG.2

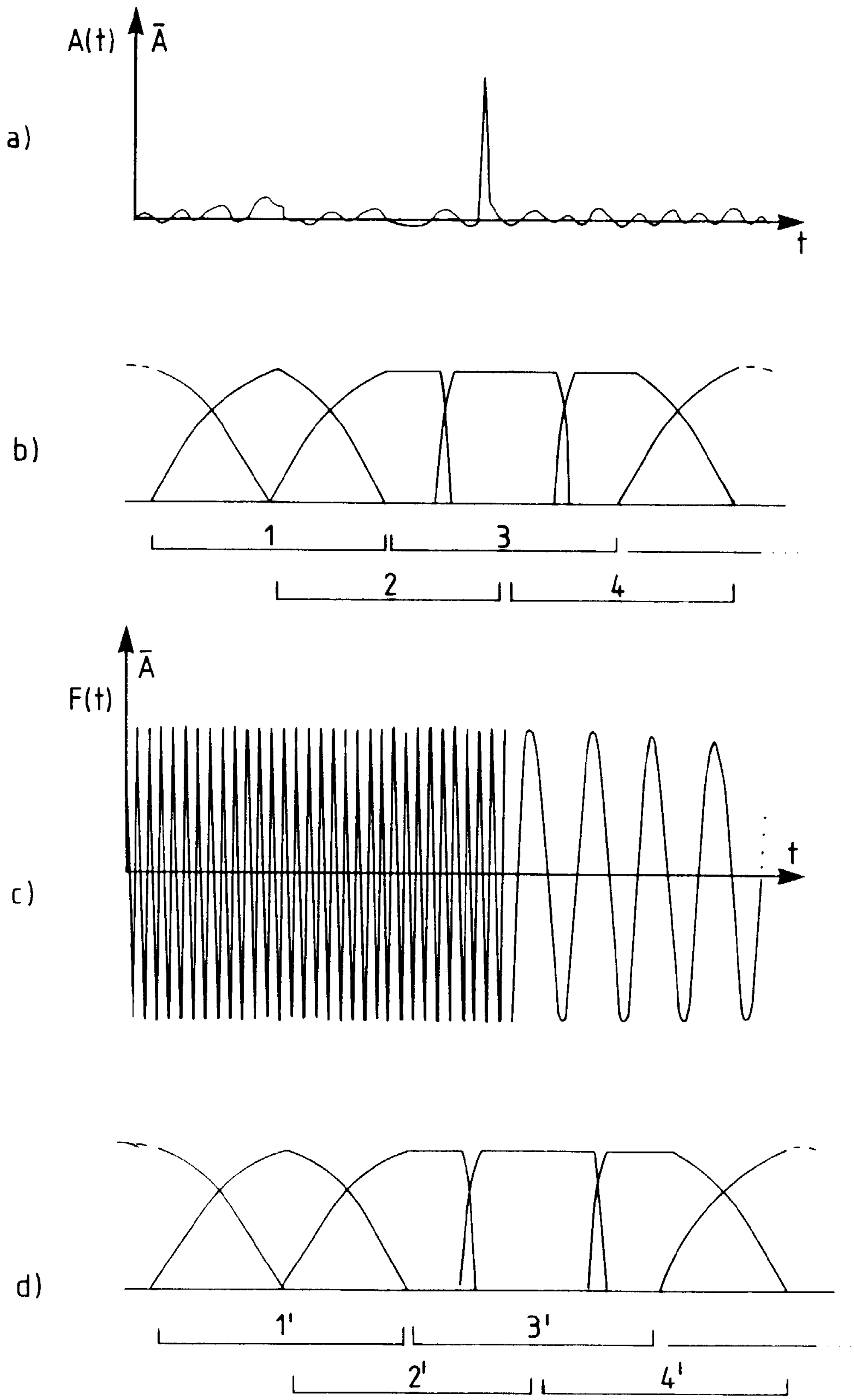


FIG.3

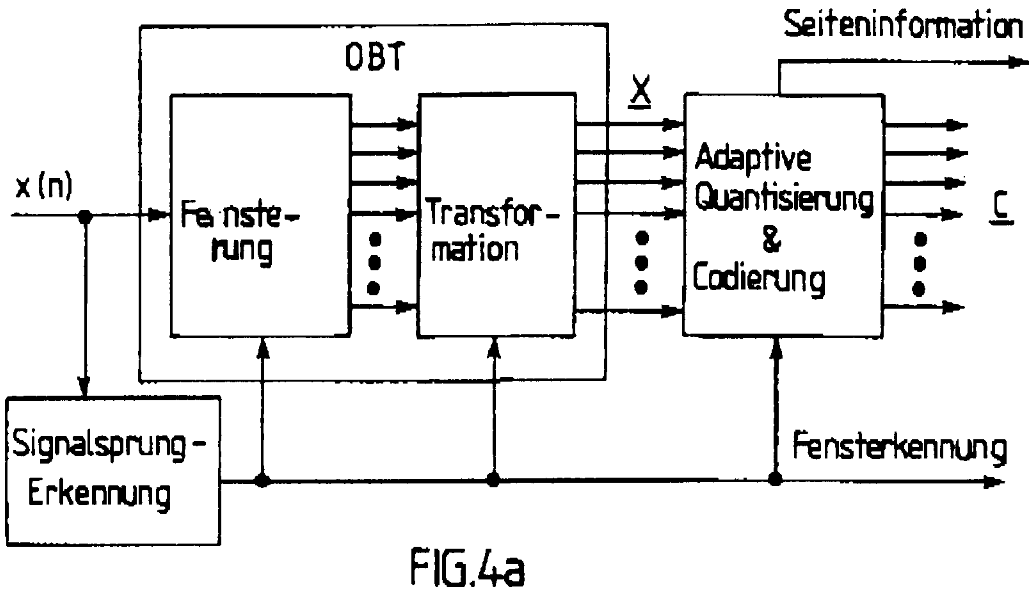
OBT
X
Seiteninformation
x (n)
Fenste-
rung
Transfor-
mation
Adaptive
Quantisierung
&
Codierung
C
Signalsprung-
Erkennung
Fensterkennung

FIG.4a

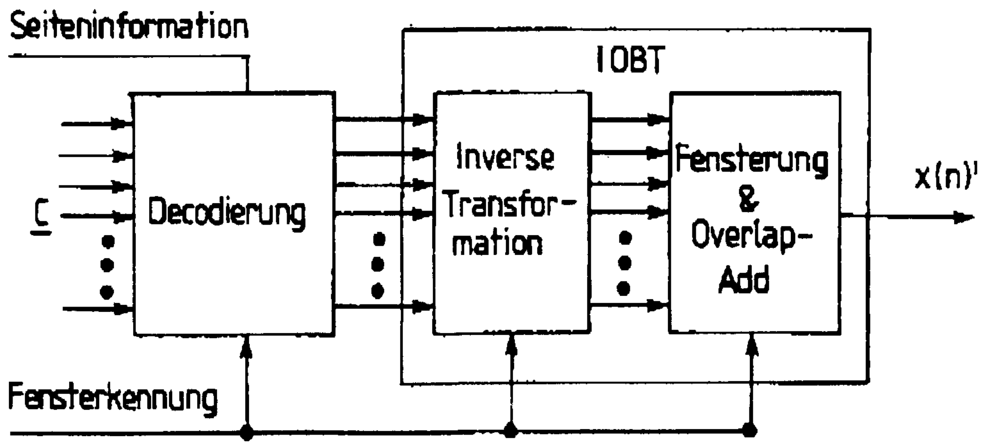
Seiteninformation
IOBT
C
Decodierung
Inverse
Transfor-
mation
Fensterung
&
Overlap-
Add
x(n)'
Fensterkennung

FIG.4b